# EUROPEAN PATENT APPLICATION

(11) **EP 4 265 974 A1**
(43) Date of publication of application: **25.10.2023**
(21) Application number: 20965901.0
(22) Date of filing: 15.12.2020
(51) Int. Cl.: F24F 11/63, G06T 7/70, F24F 120/12, G01J 5/48

(54) **IDENTIFICATION DEVICE, EQUIPMENT SYSTEM, AND IDENTIFICATION METHOD**

(71) Applicant: MITSUBISHI ELECTRIC CORPORATION, Chiyoda-ku Tokyo 100-8310 (JP)
(72) Inventor: SAKAI, Eri, Tokyo 100-8310 (JP)
(74) Representative: Studio Torta S.p.A.
(86) International application number: PCT/JP2020/046824
(87) International publication number: WO 2022/130513

(57) **Abstract**

An identification apparatus (10) identifies a person present in a target space. A strength acquirer (110) acquires a strength of a wireless signal transmitted by a terminal device (20). The wireless signal includes identification information of the terminal device (20). An associator (150) associates, when the strength acquired by the strength acquirer (110) satisfies a predetermined condition and the person is captured in a captured image of the target space, the identification information and positional information of the person acquired from the captured image with each other.

## Description

### Technical Field

The present disclosure relates to an identification apparatus, an equipment system, and an identification method.

### Background Art

A technique for identifying a person is known. For example, Patent Literature 1 describes a person detection device that uses a thermal image sensor to detect a person present in a compartment in which, for example, air-conditioning equipment or lighting equipment is installed. The person detection device described in Patent Literature 1 identifies the person detected by the thermal image sensor based on a user's identification information included in a detection request transmitted by the user's mobile terminal. This structure responds to the issue in that the person present in the compartment may not be identified based simply on a detection result from the thermal image sensor.

### Citation List

### Patent Literature

Patent Literature 1: Unexamined Japanese Patent Application Publication No. 2018-204922

### Summary of Invention

### Technical Problem

With the above technique for identifying a person, or specifically with the method described in Patent Literature 1, the person operates the mobile terminal to transmit the detection request to cause the person detection device to identify the person. Thus, easier methods for identifying a person present in a target space are awaited.

The present disclosure is made to solve the aforementioned problems, and an objective of the present disclosure is to provide, for example, an identification apparatus that easily identifies a person present in a target space.

### Solution to Problem

To achieve the above objective, an identification apparatus according to the present disclosure is an identification apparatus for identification of a person present in a target space. The identification apparatus includes strength acquisition means for acquiring a strength of a wireless signal transmitted by a terminal device and including identification information of the terminal device, and association means for associating, when the strength acquired by the strength acquisition means satisfies a predetermined condition and the person is captured in a captured image of the target space, the identification information and positional information of the person acquired from the captured image with each other.

### Advantageous Effects of Invention

The identification apparatus according to the present disclosure acquires a strength of a wireless signal transmitted by a terminal device and including identification information of the terminal device, and associates, when the strength acquired by the strength acquisition means satisfies a predetermined condition and the person is captured in a captured image of the target space, the identification information and positional information of the person acquired from the captured image with each other. Thus, according to the present disclosure, easy identification of a person present in a target space is achievable.

### Brief Description of Drawings

FIG. 1 is a block diagram illustrating overall configuration of an equipment system according to Embodiment 1;
FIG. 2 illustrates an example indoor space in Embodiment 1;
FIG. 3 is a block diagram illustrating hardware configuration of an identification apparatus according to Embodiment 1;
FIG. 4 is a block diagram illustrating hardware configuration of a terminal device according to Embodiment 1;
FIG. 5 is a block diagram illustrating hardware configuration of an imaging device according to Embodiment 1;
FIG. 6 illustrates an example captured image in Embodiment 1;
FIG. 7 is a block diagram illustrating functional configuration of the identification apparatus according to Embodiment 1;
FIG. 8 illustrates and example of preference data stored in the identification apparatus according to Embodiment 1;
FIG. 9 is a flowchart of an identification process performed by the identification apparatus according to Embodiment 1;
FIG. 10 is a block diagram illustrating hardware configuration of a terminal device according to Embodiment 2;
FIG. 11 is a block diagram illustrating functional configuration of an identification apparatus according to Embodiment 2;
FIG. 12 illustrates an example captured image in Embodiment 2;
FIG. 13 is a flowchart of an identification process performed by the identification apparatus according to Embodiment 2; and
FIG. 14 is a block diagram illustrating hardware configuration of an imaging device according to Embodiment 3.

### Description of Embodiments

Embodiments are described below in detail with reference to the drawings. The same reference signs denote the same or corresponding components in the drawings.

### Embodiment 1

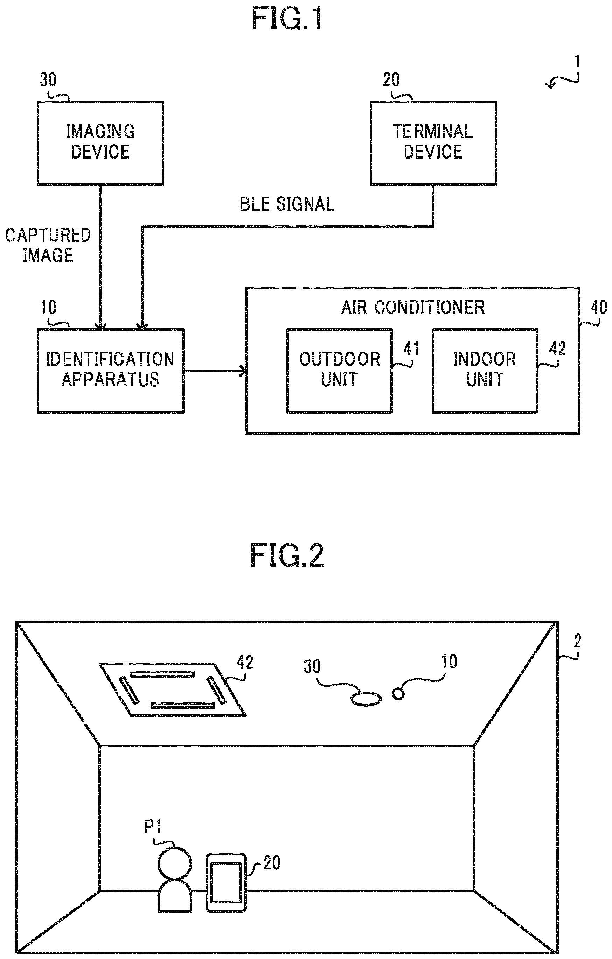

FIG. 1 illustrates overall configuration of an equipment system 1 according to Embodiment 1. The equipment system 1 includes equipment in a target space. The equipment system 1 identifies a person present in the target space and controls the equipment based on the result of the identification.

In Embodiment 1, the equipment is specifically an air conditioner 40 for air-conditioning the target space. In other words, the equipment system 1 is an air-conditioning system including the air conditioner 40. Air-conditioning herein includes adjusting the temperature, moisture, cleanliness, or flow of air in the target space for air-conditioning, and specifically includes, for example, heating, cooling, dehumidifying, humidifying, and air cleaning.

As illustrated in FIG. 1, the equipment system 1 includes an identification apparatus 10, a terminal device 20, an imaging device 30, and the air conditioner 40. The air conditioner 40 includes an outdoor unit 41 and an indoor unit 42.

FIG. 2 illustrates, as an example target space, an indoor space 2 in which the equipment system 1 is used. The indoor space 2 corresponds to a room in, for example, a detached house, a housing complex, an office building, or a plant, and corresponds to an area in which the indoor unit 42 for the air conditioner 40 is installed. In the example target space illustrated in FIG. 2, the indoor unit 42 is installed on a ceiling of the indoor space 2.

The identification apparatus 10 identifies a person P1 present in the indoor space 2 as the target space. As illustrated in, for example, FIG. 2, the identification apparatus 10 is installed on the ceiling of the indoor space 2. In some embodiments, the identification apparatus 10 may be mounted near an outlet of air-conditioned air blown out of the indoor unit 42, or may be mounted on a remote controller for operating the air conditioner 40.

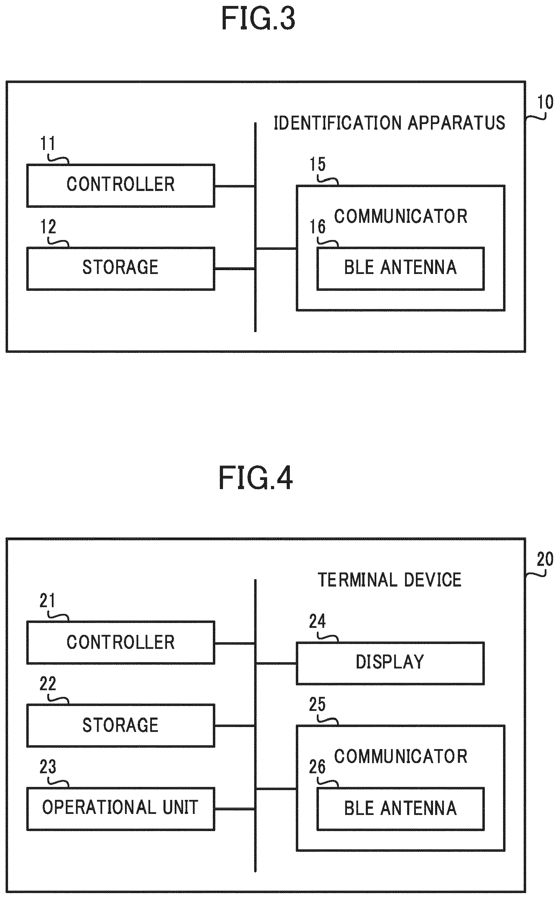

As illustrated in FIG. 3, the identification apparatus 10 includes a controller 11, a storage 12, and a communicator 15. Each of these components is connected with a communication bus.

The controller 11 includes a central processing unit (CPU), a read-only memory (ROM), and a random-access memory (RAM). The CPU may also be referred to as, for example, a central processing device, a central arithmetic device, a processor, a microprocessor, a microcomputer, or a digital signal processor (DSP), and functions as a central arithmetic processing unit for performing processes and arithmetic operations to control the identification apparatus 10. In the controller 11, the CPU reads programs and data stored in the ROM and centrally controls the identification apparatus 10 using the RAM as a work area.

The controller 11 includes a processor for image processing, such as the DSP or a graphics processing unit (GPU), and a buffer memory for temporarily storing an image to be processed to perform the image processing. For example, the controller 11 analyzes a captured image acquired by the imaging device 30 to recognize, for example, the person P1 or objects included in the captured image.

The storage 12 includes a nonvolatile semiconductor memory such as a flash memory, an erasable programmable ROM (EPROM), or an electrically erasable programmable ROM (EEPROM) to serve as a secondary storage or an auxiliary storage. The storage 12 stores programs and data used by the controller 11 to perform various processes. The storage 12 also stores data generated or acquired by the controller 11 through various processes.

The communicator 15 includes a communication interface for communicating with external devices including the terminal device 20 and the imaging device 30. The communicator 15 communicates with external devices in accordance with a known communication standard such as a wireless local area network (LAN), a wired LAN, or a universal serial bus (USB).

The communicator 15 includes a bluetooth low energy (BLE, registered trademark) antenna 16 for wireless communication in accordance with the BLE standard. The BLE is a standard for short-range wireless communication performed with lower power consumption. The communicator 15 transmits and receives a BLE signal to and from a device within a BLE communication area around the identification apparatus 10. The area allows BLE communication using a BLE signal being a wireless signal, or a radio signal, with a predetermined frequency in accordance with the BLE standard.

Referring back to FIG. 1, the terminal device 20 is an operation terminal, such as a smartphone or a tablet terminal, carried by the person P1 present in the indoor space 2. For ease of understanding, FIGS. 1 and 2 simply illustrate a single terminal device 20, but multiple terminal devices 20 may be used.

As illustrated in FIG. 4, the terminal device 20 includes a controller 21, a storage 22, an operational unit 23, a display 24, and a communicator 25. These components are connected with a communication bus.

The controller 21 includes a CPU, a ROM, and a RAM. The CPU may also be referred to as, for example, the central processing device, the central arithmetic device, the processor, the microprocessor, the microcomputer, or the DSP, and functions as the central arithmetic processing unit for performing processes and arithmetic operations for controlling the terminal device 20. In the controller 21, the CPU reads programs and data stored in the ROM and centrally controls the terminal device 20 using the RAM as a work area.

The storage 22 includes a nonvolatile semiconductor memory such as a flash memory, an EPROM, or an EEPROM to serve as a secondary storage or an auxiliary storage. The storage 22 stores programs and data used by the controller 21 to perform various processes. The storage 22 also stores data generated or acquired by the controller 21 through various processes.

The operational unit 23 includes input devices such as various keys, a touch pad, or a touchscreen, and receives an operation from a user. Through the operation on the operational unit 23, the user can input various commands into the terminal device 20. Upon receiving an operation command input by the user, the operational unit 23 transmits the operation command to the controller 21.

The display 24 includes a display device such as a liquid crystal display or an organic electroluminescence (EL) display. The display 24 is driven by a display driving circuit (not illustrated) and displays various images under control of the controller 21.

The communicator 25 includes a communication interface for communicating with external devices including the identification apparatus 10. The communicator 25 communicates with the external devices in accordance with a known communication standard such as a wireless LAN.

The communicator 25 includes a BLE antenna 26 for wireless communication in accordance with the BLE standard. The communicator 25 repeatedly transmits BLE signals to the surrounding area through the BLE antenna 26 in a predetermined cycle.

The BLE signal transmitted from the communicator 25 includes identification information of the terminal device 20 being a source of the BLE signal. The identification information is information that is uniquely set, for identification of the source the BLE signal, for each terminal device 20 that is the source of the BLE signal. For example, the identification information may be a universally unique identifier (UUID) of the BLE.

Referring back to FIG. 1, the imaging device 30 captures an image of the indoor space 2 to acquire the captured image representing the state of the indoor space 2. As illustrated in, for example, FIG. 2, the imaging device 30 is installed on the ceiling of the indoor space 2 to easily capture the image of the indoor space 2.

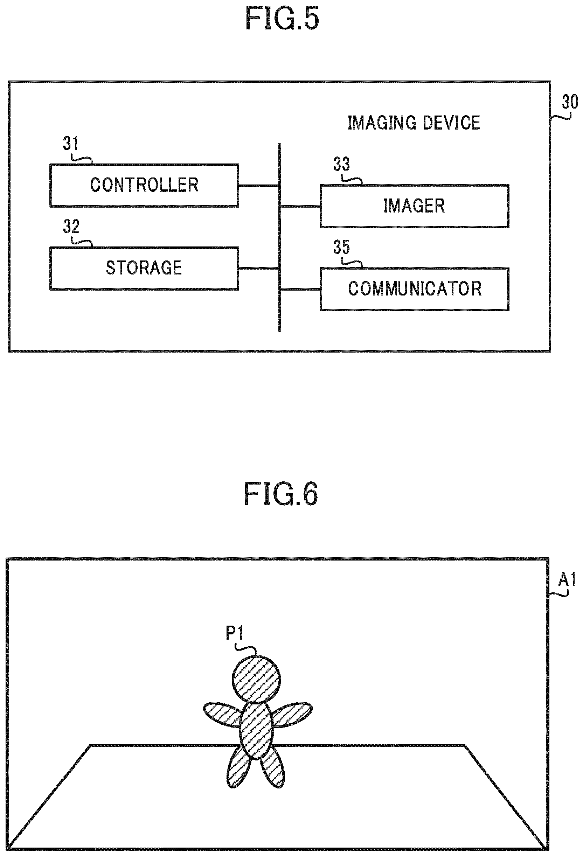

As illustrated in FIG. 5, the imaging device 30 includes a controller 31, a storage 32, an imager 33, and a communicator 35. These components are connected with a communication bus.

The controller 31 includes a CPU, a ROM, and a RAM. The CPU may also be referred to as, for example, the central processing device, the central arithmetic device, the processor, the microprocessor, the microcomputer, or the DSP, and functions as the central arithmetic processing unit for performing processes and arithmetic operations for controlling the imaging device 30. In the controller 31, the CPU reads programs and data stored in the ROM and centrally controls the imaging device 30 using the RAM as a work area.

The storage 32 includes a nonvolatile semiconductor memory such as a flash memory, an EPROM, or an EEPROM to serve as a secondary storage or an auxiliary storage. The storage 32 stores programs and data used by the controller 31 to perform various processes. The storage 32 also stores data generated or acquired by the controller 31 through various processes.

The imager 33 includes an infrared camera for capturing an image of the indoor space 2 and captures an image of the indoor space 2 with infrared rays. The infrared camera includes a lens for condensing infrared rays, an image sensor at a condensing position at which the infrared rays are condensed through the lens, and an analog-to-digital (A/D) converter for converting an electric signal representing the image acquired by the image sensor into digital data. The imager 33 captures an image of the indoor space 2 with infrared rays to acquire a thermal image representing the thermal distribution of the indoor space 2.

The communicator 35 includes a communication interface for communicating with the identification apparatus 10. The communicator 35 is connected to the identification apparatus 10 for wired or wireless communications and communicates in accordance with a known communication standard such as a wired LAN or a wireless LAN.

The imaging device 30 captures an image of the indoor space 2 with infrared rays to acquire, for example, a captured image A1 as illustrated in FIG. 6. The captured image A1 is a thermal image captured with infrared rays and thus represents the temperature distribution of the indoor space 2. More specifically, the captured image A1 indicates an area occupied by the person P1 in the indoor space 2 at a temperature different from ambient temperature. Thus, the person P1 can be detected and the position of the person P1 can be specified based on the captured image A1.

Referring back to FIG. 1, the air conditioner 40 air-conditions the indoor space 2. The air conditioner 40 is, for example, heat pump air-conditioning equipment using a refrigerant, such as carbon dioxide (CO₂) or hydrofluorocarbon (HFC).

Although not illustrated, the outdoor unit 41 and the indoor unit 42 are connected with a refrigerant circuit through which the refrigerant flows. The outdoor unit 41 includes a compressor for compressing the refrigerant and circulating the compressed refrigerant through the refrigeration circuit, a four-way valve for switching the direction of the refrigerant flowing through the refrigerant circuit, an outdoor heat exchanger for exchanging heat between the refrigerant flowing through the refrigerant circuit and outdoor air, an expansion valve for decompressing and expanding the refrigerant flowing through the refrigerant circuit, and an outdoor fan for drawing outdoor air into the outdoor heat exchanger. The indoor unit 42 includes an indoor heat exchanger for exchanging heat between the refrigerant flowing through the refrigerant circuit and air in the indoor space 2, and an indoor fan for drawing the air in the indoor space 2 into the indoor heat exchanger.

The outdoor unit 41 and the indoor unit 42 each include a CPU, a ROM, a RAM, a communication interface, and a readable and writable nonvolatile semiconductor memory. The outdoor unit 41 and the indoor unit 42 performs emphasis operation in accordance with control signals transmitted from the identification apparatus 10 to entirely control the air conditioner 40. More specifically, the outdoor unit 41 controls the drive frequency of the compressor, switching of the four-way valve, the rotational speed of the outdoor fan, and the opening degree of the expansion valve. The indoor unit 42 also controls the rotational speed of the indoor fan. This allows the indoor space 2 to be air-conditioned.

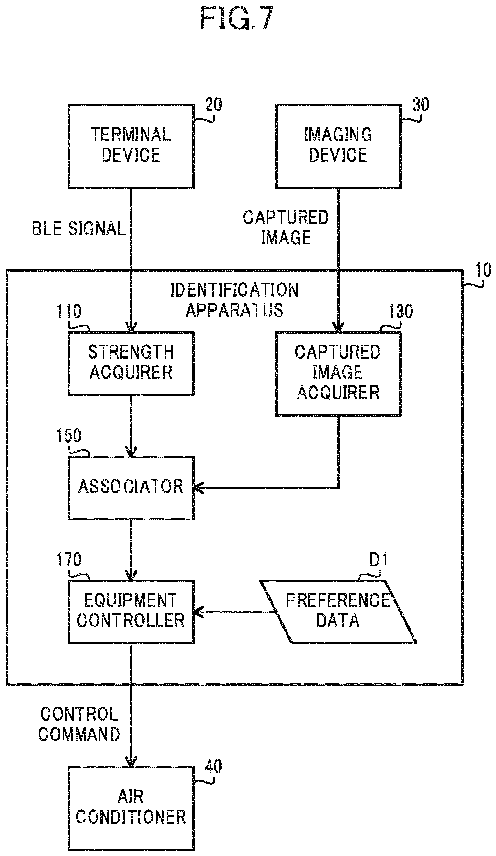

The functions of the equipment system 1 are now described with reference to FIG. 7.

As illustrated in FIG. 7, the identification apparatus 10 includes, as functional components, a strength acquirer 110, a captured image acquirer 130, an associator 150, and an equipment controller 170. These functions are implemented by software, firmware, or a combination of software and firmware. The software and the firmware are described as programs, and the programs are stored in the ROM or the storage 12. When the CPU executes the programs stored in the ROM or the storage 12, these functions are implemented.

The strength acquirer 110 acquires the strength of a BLE signal transmitted from the terminal device 20. The BLE signal is a wireless signal transmitted from the BLE antenna 26 in the terminal device 20 and includes the identification information of the terminal device 20. When at least one person P1 carrying the terminal device 20 is present within the BLE communication area, the BLE antenna 16 in the identification apparatus 10 receives a BLE signal transmitted from the BLE antenna 26 in the terminal device 20.

When the BLE antenna 16 receives a BLE signal, the strength acquirer 110 measures the strength of the BLE signal received by the BLE antenna 16 as the strength of the BLE signal. As the terminal device 20 being the source of the BLE signal is nearer the BLE antenna 16, the strength of the received BLE signal is greater. This allows the strength of the received BLE signal to be used as an indicator of the distance between the terminal device 20 and the BLE antenna 16.

When the terminal device 20 is not present within the BLE communication area, the BLE antenna 16 cannot receive a BLE signal. The strength of the BLE signal is thus 0. The strength acquirer 110 is implemented by the controller 11 cooperating with the BLE antenna 16. The strength acquirer 110 is an example of strength acquisition means.

The captured image acquirer 130 acquires a captured image of the indoor space 2. The captured image is, for example, the captured image A1 illustrated in FIG. 6, or more specifically, a thermal image representing the temperature distribution of the indoor space 2. The thermal image is captured by the imaging device 30 imaging the indoor space 2.

The captured image acquirer 130 communicates with the imaging device 30 through the communicator 15 to acquire the captured image from the imaging device 30. More specifically, the captured image acquirer 130 transmits a request for the captured image to the imaging device 30 through the communicator 15. In the imaging device 30, when receiving the request from the identification apparatus 10, the controller 31 transmits, as a response, the captured image captured by the imager 33 to the identification apparatus 10. The captured image acquirer 130 is implemented by the controller 11 cooperating with the communicator 15. The captured image acquirer 130 is an example of captured image acquisition means.

Referring back to FIG. 7, when the strength of the BLE signal acquired by the strength acquirer 110 satisfies a predetermined condition and the person P1 present in the indoor space 2 is captured in the captured image acquired by the captured image acquirer 130, the associator 150 associates the identification information of the terminal device 20 and positional information of the person P1 acquired from the captured image with each other. The associator 150 is implemented by the controller 11 cooperating with the storage 12. The associator 150 is an example of association means.

The associator 150 first determines whether the strength of the BLE signal acquired by the strength acquirer 110 satisfies the predetermined condition. The predetermined condition is used to determine whether the terminal device 20 transmitting the BLE signal has approached the indoor space 2. The associator 150 determines, by determining whether the strength of the BLE signal acquired by the strength acquirer 110 satisfies the predetermined condition, whether the terminal device 20 transmitting the BLE signal has approached the indoor space 2.

More specifically, the strength of the BLE signal acquired by the strength acquirer 110 satisfies the predetermined condition by increasing from below a threshold to above the threshold. In other words, when the strength of the BLE signal received by the BLE antenna 16 increases from below the threshold to above the threshold, the associator 150 determines that the terminal device 20 has approached the indoor space 2.

When, for example, the strength of the BLE signal received by the BLE antenna 16 remains above the threshold but has decreased, the person P1 carrying the terminal device 20 is moving away from the indoor space 2. In this case, the associator 150 does not identify the person P1 moving away from the indoor space 2 and thus removes the person P1 from the association target.

In contrast, when the strength of the BLE signal received by the BLE antenna 16 has increased, the person P1 carrying the terminal device 20 is likely to be entering the indoor space 2. This allows the associator 150 to determine, when the strength of the BLE signal received by the BLE antenna 16 has increased to above the threshold, that the person P1 carrying the terminal device 20 has approached the indoor space 2.

To appropriately detect the terminal device 20 approaching the indoor space 2, the threshold is preset to a value corresponding to the strength of the BLE signal transmitted from the terminal device 20 present near the indoor space 2. Thus, based on changes in the strength of the BLE signal acquired by the strength acquirer 110, the associator 150 determines whether the terminal device 20 transmitting the BLE signal has approached the indoor space 2.

When the strength acquired by the strength acquirer 110 satisfies the predetermined condition, the associator 150 then determines whether the person P1 is captured in the captured image acquired by the captured image acquirer 130. In other words, after the strength acquired by the strength acquirer 110 satisfies the predetermined condition, the associator 150 determines whether the person P1 has entered an imaging area of the imaging device 30 and the person P1 has been captured in the captured image.

More specifically, when the strength acquired by the strength acquirer 110 satisfies the predetermined condition, the associator 150 acquires, from the captured image acquirer 130, the captured image of the indoor space 2 captured by the imaging device 30. Upon acquiring the captured image, the associator 150 analyzes the captured image acquired to determine whether the image of the person P1 in the captured image matches characteristics of the person P1 such as the size or the shape, and whether the captured image includes an area having a higher temperature than ambient temperature. In this manner, the associator 150 determines whether the person P1 determined to be approaching the indoor space 2 has entered the indoor space 2.

When the person P1 is captured in the captured image, the associator 150 acquires the positional information of the person P1 from the captured image. More specifically, when the person P1 is captured in the captured image, the associator 150 specifies the position of the person P1 in the captured image. Thus, the associator 150 specifies the position of the person P1 present in the indoor space 2 relative to the imaging device 30. The specified position of the person P1 can be converted to a position in the indoor space 2 based on a predetermined conversion formula.

Further, when the person P1 is moving, the associator 150 specifies a movement vector indicating the direction and magnitude of the movement of the person P1. This allows the associator 150 to track the position of the person P1 when the person P1 moves after the position of the person P1 is specified.

Upon acquiring the positional information of the person P1 from the captured image, the associator 150 associates the acquired positional information of the person P1 and the identification information of the terminal device 20 carried by the person P1 with each other. In other words, when the person P1 is present in the indoor space 2, the associator 150 associates the positional information of the person P1 and the identification information of the terminal device 20 carried by the person P1 with each other. This allows the associator 150 to determine that the person P1 identified with the identification information is present at the position determined based on the positional information. Thus, based on the identification information of the terminal device 20, in addition to the captured image of the indoor space 2, the associator 150 can identify the person P1, in addition to specifying the position of the person P1 in the indoor space 2.

The equipment controller 170 controls the air conditioner 40 being equipment installed in the indoor space 2 based on the identification information and the positional information associated with each other by the associator 150. To control the air conditioner 40, the equipment controller 170 determines the control settings of the air conditioner 40 based on the identification information and the positional information associated with each other by the associator 150.

The equipment controller 170 first determines the control settings of the indoor unit 42 based on the positional information of the person P1 acquired from the captured image. More specifically, the equipment controller 170 calculates a distance from the indoor unit 42 to the person P1 and the direction based on the positional information of the person P1. Based on the calculated distance and direction, the equipment controller 170 determines the strength and direction of the air-conditioned air blown out of the indoor unit 42 to enhance the comfort for the person P1.

The equipment controller 170 then determines the control settings of the air conditioner 40 based on the identification information associated with the positional information of the person P1. More specifically, the equipment controller 170 causes the air conditioner 40 to perform air-conditioning based on selected control settings of multiple predetermined control settings corresponding to the identification information associated with the positional information of the person P1. For this operation, the equipment controller 170 refers to preference data D1 stored in the storage 12.

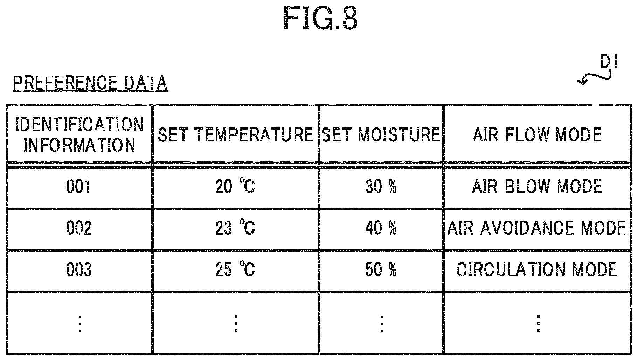

FIG. 8 illustrates an example of the preference data D1. The preference data D1 is a table of data storing air-conditioning preferences of multiple persons to be possibly present in the indoor space 2. Each of the air-conditioning preferences is in correspondence with the identification information of the terminal device 20 operated by the corresponding one of the multiple persons. More specifically, as illustrated in FIG. 8, the preference data D1 stores, as information indicating each of the air-conditioning preferences, set temperature, set moisture, and air flow mode in a manner associated with the identification information of the corresponding terminal device 20.

The preference data D1 is generated based on the history of operations on the air conditioner 40 received by each of the terminal devices 20. For example, the equipment controller 170 stores the set temperature, the set moisture, and the air flow that are set most frequently in the history on each of the terminal devices 20 in correspondence with the identification information of the corresponding terminal device 20.

Upon determining the control settings based on the positional information and the identification information associated with each other by the associator 150 in the manner described above, the equipment controller 170 causes the air conditioner 40 to perform air-conditioning in accordance with the determined control settings. More specifically, the equipment controller 170 transmits a control command indicating the determined control settings to the air conditioner 40 through the communicator 15. Upon receiving the control command, the air conditioner 40 determines, for example, the set temperature, the set moisture, the airflow direction, or the airflow rate in accordance with the received control command to air-condition the indoor space 2.

To cause the air conditioner 40 to perform air-conditioning in accordance with the preference of the person P1, the equipment controller 170 changes the control settings of the air-conditioning in accordance with the identification information of the terminal device 20. This improves the comfort of the person P1 present in the indoor space 2. The equipment controller 170 is implemented by the controller 11 cooperating with the communicator 15. The equipment controller 170 is an example of equipment control means.

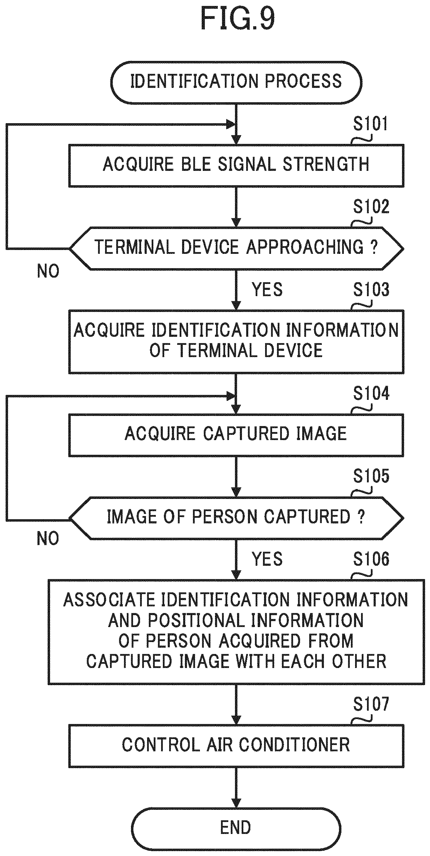

An identification process performed by the above identification apparatus 10 is described with reference to the flowchart of FIG. 9. The identification process of FIG. 9 is performed as appropriate when the identification apparatus 10 is powered on and is ready to normally perform processes.

When the identification process starts, the controller 11 acquires the strength of the BLE signal transmitted from the terminal device 20 (step S101). More specifically, when at least one terminal device 20 is present within the BLE communication area, the BLE antenna 16 receives the BLE signal transmitted from the terminal device 20, and the controller 11 measures the strength of the received BLE signal.

After acquiring the strength of the BLE signal, the controller 11 determines whether the terminal device 20 has approached the indoor space 2 based on the acquired strength (step S102). More specifically, the controller 11 determines whether the strength of the BLE signal acquired in step S101 increases from below the threshold to above the threshold.

When the terminal device 20 has not approached the indoor space 2 (NO in step S102), the controller 11 returns to step S101 and continues to acquire the strength of the BLE signal. The controller 11 repeats the process of determining, based on the acquired strength, whether the person P1 approaching the indoor space 2 is present in the indoor space 2.

When the terminal device 20 has approached the indoor space 2 (YES in step S102), the controller 11 acquires the identification information of the terminal device 20 included in the BLE signal received by the BLE antenna 16 and stores the acquired identification information into the storage 12 (step S103).

After acquiring the identification information, the controller 11 acquires the captured image from the imaging device 30 (step S104). More specifically, by communicating with the imaging device 30 through the communicator 15, the controller 11 acquires the captured image of the indoor space 2 captured by the imaging device 30.

After acquiring the captured image, the controller 11 determines whether the person P1 is captured in the captured image acquired (step S105). In other words, the controller 11 determines whether the person P1 carrying the terminal device 20 determined in step S102 to have approached the indoor space 2 has entered the imaging area of the imaging device 30 in the indoor space 2.

When the person P1 is not captured in the captured image (NO in step S105), the controller 11 returns the processing to step S104. The controller 11 then repeats the process of acquiring the captured image from the imaging device 30 and determining whether the person P1 determined to have approached the indoor space 2 is captured in the captured image.

In contrast, when the person P1 is captured in the captured image (YES in step S105), the controller 11 associates the identification information of the terminal device 20 and the positional information of the person P1 acquired from the captured image with each other (step S106). More specifically, the controller 11 acquires the positional information of the person P1 from the captured image. The controller 11 then determines that the person P1 identified with the identification information acquired in step S103 is present at the position determined based on the acquired positional information.

After associating the identification information and the positional information with each other, the controller 11 controls the air conditioner 40 based on the results of the association (step S107). More specifically, the controller 11 determines the control settings based on the identification information and the positional information associated with each other. The controller 11 then transmits a control command to the air conditioner 40 to cause the air conditioner 40 to perform air-conditioning based on the control settings. In this process, the controller 11 refers to the preference data D1 stored in the storage 12 and causes the air conditioner 40 to perform air-conditioning based on the control settings in correspondence with the identification information of the terminal device 20.

As described above, the identification apparatus 10 according to Embodiment 1 acquires the strength of the BLE signal transmitted from the terminal device 20. When the acquired strength of the BLE signal satisfies the predetermined condition and the person P1 is captured in the captured image of the indoor space 2, the identification apparatus 10 according to Embodiment 1 associates the positional information of the person P1 acquired from the captured image and the identification information included in the BLE signal with each other. Thus, the identification apparatus 10 according to Embodiment 1 determines whether the person P1 has approached the indoor space 2 based on the strength of the BLE signal transmitted from the terminal device 20 and uses the identification information of the terminal device 20 included in the BLE signal. This allows the person P1 present in the indoor space 2 to be easily identified without causing the person P1 to perform any particular operation. This allows the air conditioner 40 to be appropriately controlled and enhances the comfort of the indoor space 2.

When the captured image alone is used, the positional information of the person P1 in the indoor space 2 is acquired but the person P1 is less likely to be identified. In contrast, the identification apparatus 10 according to Embodiment 1 uses, in addition to the captured image, the strength of the BLE signal transmitted from the terminal device 20 and the identification information of the terminal device 20 included in the BLE signal. This allows the identification apparatus 10 to acquire, in addition to the positional information of the person P1 in the indoor space 2, the identification information of the person P1.

### Embodiment 2

Next, Embodiment 2 is described. The same components and functions as in Embodiment 1 are not described.

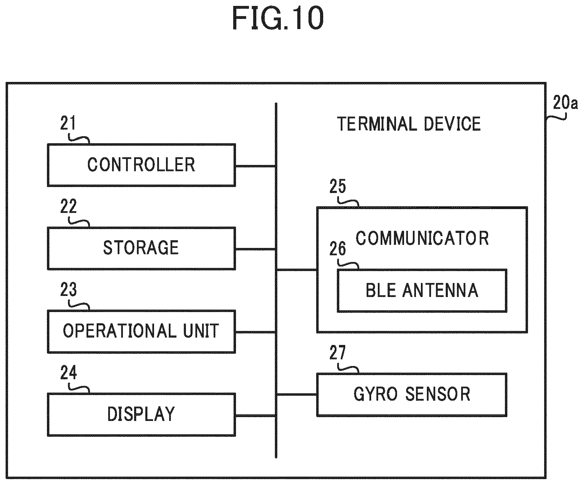

As illustrated in FIG. 10, a terminal device 20a according to Embodiment 2 includes a controller 21, a storage 22, an operational unit 23, a display 24, a communicator 25, and a gyro sensor 27. The terminal device 20a has the same structure, other than the gyro sensor 27, as the terminal device 20 in Embodiment 1.

The gyro sensor 27 measures angular acceleration applied to the terminal device 20a. The terminal device 20a is carried by a person. Thus, as the person moves, the terminal device 20a receives various movements such as translation or rotation. The gyro sensor 27 measures the angular acceleration generated by such various movements applied to the terminal device 20a.

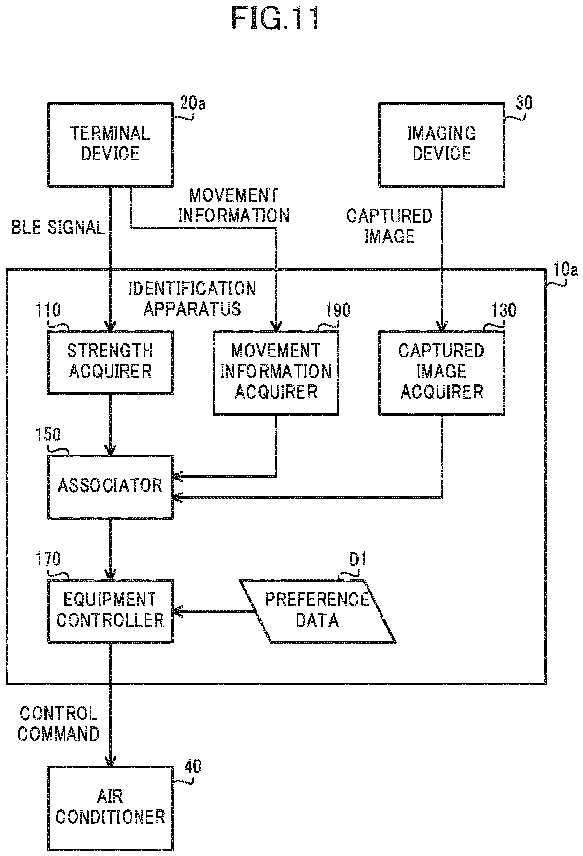

As illustrated in FIG. 11, an identification apparatus 10a according to Embodiment 2 includes, as functional components, a strength acquirer 110, a captured image acquirer 130, an associator 150, an equipment controller 170, and a movement information acquirer 190. The functions of the strength acquirer 110, the captured image acquirer 130, and the equipment controller 170 are the same as the corresponding functions in Embodiment 1, and are not described.

The movement information acquirer 190 acquires movement information of the terminal device 20a. The movement information of the terminal device 20a indicates the movement applied to the terminal device 20a following the movement of the person carrying the terminal device 20a. The movement information acquirer 190 communicates with the terminal device 20a through the communicator 15 to acquire, as the movement information, the measurement information about angular acceleration measured by the gyro sensor 27 included in the terminal device 20a. The movement information acquirer 190 is implemented by the controller 11 cooperating with the communicator 15. The movement information acquirer 190 is an example of movement information acquisition means.

More specifically, when the strength acquired by the strength acquirer 110 satisfies the predetermined condition and multiple persons are captured in a captured image, the movement information acquirer 190 acquires the movement information from the terminal device 20a.

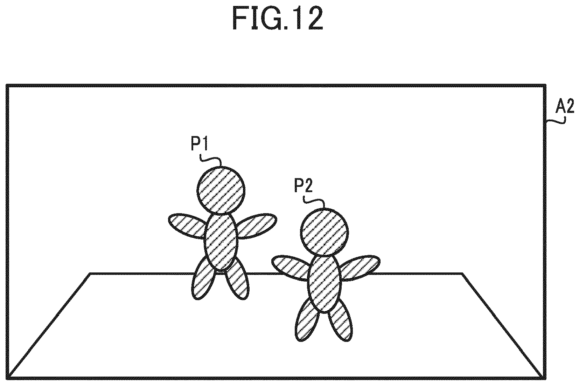

FIG. 12 illustrates, as an example of the captured image capturing the multiple persons, a captured image A2 capturing two persons P1 and P2. When the images of the multiple persons P1 and P2 are simultaneously captured as in the captured image A2, the determination as to which of the person P1 or P2 is carrying the terminal device 20a transmitting the BLE signal received by the BLE antenna 16 is unachievable based on the captured image A2 alone. Thus, to determine the person carrying the terminal device 20a, the movement information acquirer 190 acquires the movement information of the terminal device 20a.

When the movement information is acquired by the movement information acquirer 190 from the terminal device 20a, the associator 150 determines whether movement of any one of the multiple persons P1 and P2 captured in the captured image matches the acquired movement information. The associator 150 then determines that one of the multiple persons P1 and P2 matching the acquired movement information is the person carrying the terminal device 20a.

More specifically, the associator 150 refers to the movement information acquired by the movement information acquirer 190 to specify timing at which angular acceleration greater than a reference value is applied to the terminal device 20a. Examples of the timing at which the angular acceleration greater than the reference value is applied includes timing at which the person carrying the terminal device 20a stands up or starts moving.

Further, the associator 150 refers to the captured image acquired by the captured image acquirer 130 to monitor the movements of the multiple persons in the captured image. The associator 150 then determines whether any one of the multiple persons has moved at the same timing as the timing specified in the movement information. After determining that any one of the multiple persons has moved at the same timing as the timing specified in the movement information, the associator 150 determines that the movement of the person matches the movement information.

The associator 150 associates, with the identification information, the positional information of the person, of the multiple persons captured in the captured image, having in the captured image a movement matching the movement information acquired by the movement information acquirer 190. More specifically, the associator 150 acquires, from the captured image, the positional information of the person with the movement matching the movement information. The associator 150 then associates the acquired positional information of the person and the identification information of the terminal device 20a carried by the person with each other.

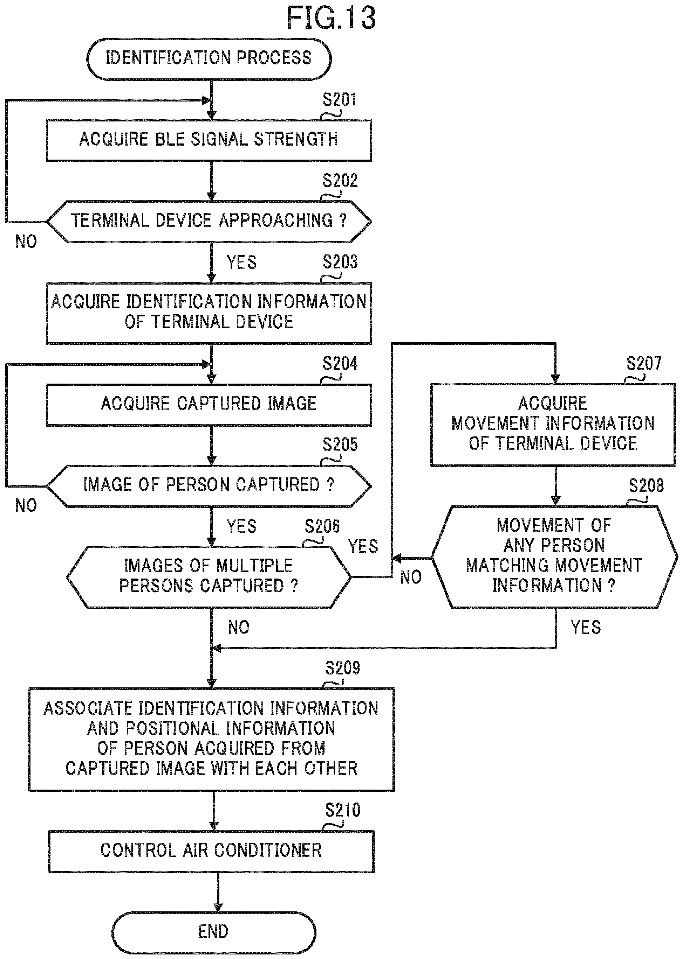

An identification process performed by the above identification apparatus 10a is described with reference to the flowchart of FIG. 13. The identification process of FIG. 13 is performed as appropriate when the identification apparatus 10a is powered on and is ready to normally perform processes. Processing in steps S201 to S205 is the same as the processing in steps S101 to S105 described with reference to FIG. 9 in Embodiment 1, and the processing is thus not described.

When a person is captured in the captured image in step 205 (YES in step S205), the controller 11 further determines whether multiple persons are captured in the captured image (step S206). The controller 11 determines whether the multiple persons P1 and P2 have simultaneously entered the imaging area of the imaging device 30 as illustrated in, for example, the captured image A2 illustrated in FIG. 12.

When the images of the multiple persons are captured (YES in step S206), the controller 11 acquires the movement information from the terminal device 20a (step S207). More specifically, the controller 11 communicates with the terminal device 20a to acquire the measurement information measured by the gyro sensor 27 included in the terminal device 20a.

After acquiring the movement information, the controller 11 determines whether movement of any one of the multiple persons captured in the captured image matches the movement information acquired from the terminal device 20a (step S208). More specifically, the controller 11 monitors the movements of the multiple persons in the captured images to determine whether any one of the multiple persons moves at the same timing as when the angular acceleration greater than the reference value is applied to the terminal device 20a.

When the movement of any one of the multiple persons does not match the movement information (NO in step S208), the controller 11 returns the processing to step S207. The controller 11 then continuously repeats the processes of acquiring the movement information from the terminal device 20a and determining whether the movement of any one of the multiple persons matches the movement information.

In contrast, when the movement of any one of the multiple persons matches the movement information (YES in step S208), the controller 11 associates the identification information of the terminal device 20a and the positional information of the person matching the movement information with each other (step S209). More specifically, the controller 11 acquires, from the captured image, the positional information of the person with the movement matching the movement information. The controller 11 then determines that the person identified with the identification information acquired in step S203 is present at the position determined based on the positional information.

When the multiple persons are not captured in the captured image in step S206 (NO in step S206), or in other words, when the one person alone is captured in the captured image, the controller 11 skips the processing in steps S207 and S208. In this case, in step S209, the controller 11 associates the positional information of the person acquired from the captured image with the identification information acquired in step S203.

After associating the positional information and the identification information with each other, the controller 11 controls the air conditioner 40 based on the results of the association (step S210). The processing in step S210 is the same as the processing in step S107 in Embodiment 1.

As described above, the identification apparatus 10a according to Embodiment 2 acquires the movement information of the terminal device 20a. When the strength of the BLE signal satisfies the predetermined condition and the multiple persons are captured in the captured image, the identification apparatus 10a associates, with the identification information of the terminal device 20a, the positional information of one person, of the multiple persons in the captured image, having in the captured image a movement matching the movement information. Thus, acquiring the movement information of the terminal device 20a allows accurate identification of the person present in the indoor space 2 when the multiple persons have entered the indoor space 2.

### Embodiment 3

Next, Embodiment 3 is described. The same components and functions as in Embodiments 1 and 2 are not described.

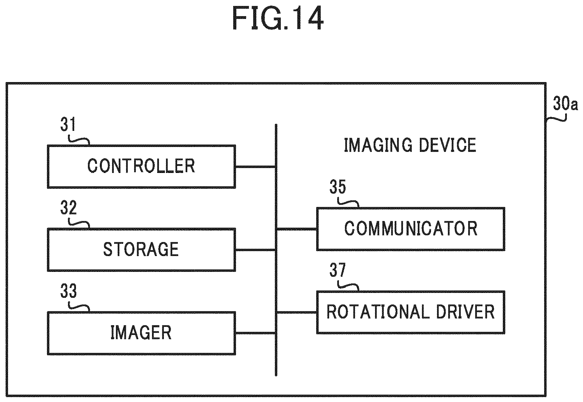

As illustrated in FIG. 14, an imaging device 30a according to Embodiment 3 includes a controller 31, a storage 32, an imager 33, a communicator 35, and a rotational driver 37. The imaging device 30a has the same structure, other than the rotational driver 37, as the imaging device 30 in Embodiment 1.

The rotational driver 37 includes drive components such as a motor or an actuator, and drives the imager 33 to rotate to change the orientation of the optical axis of the imager 33. This rotation due to driving by the rotational driver 37 allows the imager 33 to capture the image over a wide range of the indoor space 2. The rotational driver 37 is an example of rotational drive means.

In the identification apparatus 10, the captured image acquirer 130 acquires, as the captured image, an image captured by the imager 33 that is rotatable by driving by the rotational driver 37. The captured image acquirer 130 transmits a request for the imaging device to the imaging device 30a through the communicator 15. In this process, the captured image acquirer 130 transmits a command to either drive the imager 33 to rotate to capture an image of the indoor space 2 or fix the orientation of the imager 33 to capture an image of the indoor space 2.

More specifically, when a first condition is satisfied, the captured image acquirer 130 drives the rotational driver 37 and acquires the captured image captured with the imager 33 being rotating. This allows the captured image acquirer 130 to acquire the image captured over the wide range of the indoor space 2. In contrast, when a second condition is satisfied, the captured image acquirer 130 does not drive the rotational driver 37 and acquires the captured image captured with the orientation of the imager 33 being fixed. This allows the captured image acquirer 130 to selectively acquire the captured image in a limited area of the indoor space 2.

The first and second conditions may be set as appropriate. In an example, the first condition may be a condition that no person is captured in the captured image, and the second condition may be a condition that a person is captured in the captured image. In other words, when no person is captured in the captured image, the captured image acquirer 130 acquires the captured image captured with the imager 33 being rotating. In contrast, when a person is captured in the captured image, the captured image acquirer 130 acquires the captured image captured with the orientation of the imager 33 being fixed.

More specifically, when no person is captured in the captured image, the captured image acquirer 130 causes the imager 33 to rotate to capture an image over the wide range of the indoor space 2. In this manner, the captured image acquirer 130 searches for a person entering any part of the indoor space 2. In contrast, when a person is captured in the captured image, the captured image acquirer 130 fixes the orientation of the imager 33 in the direction of the person. In this manner, the captured image acquirer 130 captures a detailed image of the person present in the indoor space 2 and monitors the movement of the person.

In another example, the first condition may be a condition that the strength of the BLE signal acquired by the strength acquirer 110 satisfies the predetermined condition, and the second condition may be a condition that the strength of the BLE signal acquired by the strength acquirer 110 does not satisfy the predetermined condition. In other words, when the strength of the BLE signal acquired by the strength acquirer 110 satisfies the predetermined condition, the captured image acquirer 130 acquires the captured image captured with the imager 33 being rotating. In contrast, when the strength of the BLE signal acquired by the strength acquirer 110 does not satisfy the predetermined condition, the captured image acquirer 130 acquires the captured image captured with the orientation of the imager 33 being fixed.

More specifically, when the person carrying the terminal device 20 is not approaching the indoor space 2, the captured image acquirer 130 fixes the orientation of the imager 33. This allows the captured image acquirer 130 to reduce power consumption resulting from the driving for the rotation of the imager 33. In contrast, when the person carrying the terminal device 20 approaches the indoor space 2, the captured image acquirer 130 causes the imager 33 to rotate to capture an image over the wide range of the indoor space 2. This allows the captured image acquirer 130 to search for the person approaching the indoor space 2 entering the indoor space 2.

When the person approaching the indoor space 2 has entered the indoor space 2 and the person is captured in the captured image, the captured image acquirer 130 may stop causing the rotational driver 37 to rotate the imager 33 and then fix the orientation of the imager 33 in the direction of the person.

As described above, the identification apparatus 10 according to Embodiment 3 uses the rotatably-drivable imager 33 to switch, based on each situation, between capturing an image over the wide range of the indoor space 2 and capturing a detailed image of the limited area of the indoor space 2. This allows the identification apparatus 10 to acquire more detailed positional information of the person present in the indoor space 2 and to more appropriately control the air conditioner 40 based on the acquired more detailed positional information.

### Modifications

Although the embodiments of the present disclosure have been described above, the present disclosure is not limited to the embodiments, and any combination, modification, or elimination may be made appropriately.

For example, in the above embodiments, the associator 150 determines that the terminal device 20 or 20a has approached the indoor space 2 when the strength of the BLE signal received by the BLE antenna 16 increases from below the threshold to above the threshold. However, the associator 150 may determine whether the terminal device 20 or 20a has approached the indoor space 2 based on predetermined conditions other than the above. In an example, the predetermined condition may be satisfied with the increase rate of the strength of the BLE signal received by the BLE antenna 16 being greater than a reference value. In another example, the predetermined condition may be satisfied with an increase in the strength of the BLE signal received by the BLE antenna 16 to greater than the threshold.

In the above embodiments, after the strength of the BLE signal acquired by the strength acquirer 110 satisfies the predetermined condition, the associator 150 determines whether the person P1 is captured in the captured image. However, the sequential order of the determination process may be changed. After the person P1 is captured in the captured image, the associator 150 may determine whether the strength of the BLE signal acquired by the strength acquirer 110 satisfies the predetermined condition.

More specifically, until when the person P1 is captured in the captured image of the indoor space 2 captured by the imaging device 30 or 30a, the associator 150 does not determine whether the strength of the BLE signal acquired by the strength acquirer 110 satisfies the predetermined condition. In response to the person P1 being captured in the captured image, the associator 150 starts determining whether the strength of the BLE signal satisfies the predetermined condition. For example, when the strength of the BLE signal is greater than the threshold, the associator 150 determines that the predetermined condition is satisfied. When the strength of the BLE signal satisfies the predetermined condition, the associator 150 associates the identification information included in the BLE signal and the positional information of the person P1 acquired from the captured image with each other.

The determination process performed based on the strength of the BLE signal after the person P1 is detected in the captured image reduces erroneous detection, for example, detection of a person approaching the indoor space 2 but not entering the indoor space 2, such as a person moving past the indoor space 2.

In the above embodiments, the equipment in the equipment system 1 is the air conditioner 40. However, the equipment is not limited to the air conditioner 40 and may be, for example, a lighting device that illuminates the target space. When the equipment is a lighting device, the equipment controller 170 controls the lighting device based on the identification information and the positional information of the person P1 associated with each other by the associator 150. In this case, the lighting device is controlled in the same manner as with the air conditioner 40 being equipment.

For example, in the indoor space 2 including multiple lighting devices, the equipment controller 170 turns on one of the multiple lighting devices nearest the person P1. The equipment controller 170 also refers to the preference data D1 to cause one of the multiple lighting devices to illuminate the indoor space 2 based on selected control settings of multiple predetermined control settings that correspond to the identification information associated with the positional information of the person P1. The preference data D1 stores information indicating the lighting preferences of the multiple persons to be possibly present in the indoor space 2. Each of the lighting preferences is stored in correspondence with the identification information of the terminal device 20 or 20a operated by the corresponding one of the multiple persons. Examples of the lighting preferences stored in the preference data D1 include lighting parameters such as illuminance or a color temperature.

In the above embodiments, the imaging device 30 or 30a captures an image of the indoor space 2 with the infrared rays to acquire a thermal image representing the temperature distribution of the indoor space 2. However, the imaging device 30 or 30a may capture an image of the indoor space 2 with, for example, visible rays, rather than with the infrared rays, to acquire a visible image.

In the above embodiments, the target space, in which the equipment is installed, is the indoor space 2. However, the target space may be any space, other than an indoor space, that is captured by the imaging device 30 or 30a.

In the above embodiments, the identification apparatus 10 or 10a is a separate and independent device from the imaging device 30 or 30a. However, the identification apparatus 10 or 10a may include the imaging device 30 or 30a. In other words, the identification apparatus 10 or 10a may include the imager 33 for capturing an image of the indoor space 2.

In some embodiments, the imaging device 30 or 30a may have some of the functions of the identification apparatus 10 or 10a. For example, the imaging device 30 or 30a may have the functions of the captured image acquirer 130. The imaging device 30 or 30a may then determine whether the person P1 is captured in the captured image acquired by the captured image acquirer 130. When the person P1 is captured in the captured image, the imaging device 30 or 30a may specify the positional information of the person P1. In this case, the identification apparatus 10 or 10a acquires, from the imaging device 30 or 30a through the communicator 15, the results of determination and specification processes performed by the imaging device 30 or 30a.

The identification apparatus 10 or 10a may not have the functions of the equipment controller 170. For example, the identification apparatus 10 or 10a may transmit the results of the association performed by the associator 150 to another device having the functions of the equipment controller 170, and the other device may then control the equipment based on the results of the association performed by the identification apparatus 10 or 10a.

In the above embodiments, the identification apparatus 10 or 10a includes the BLE antenna 16 for receiving the BLE signal transmitted from the terminal device 20 or 20a and acquires the strength of the received BLE signal. However, the wireless signal received by the identification apparatus 10 or 10a from the terminal device 20 or 20a may be any wireless signal, other than the BLE signal, that includes the identification information for identification of the source. For example, the wireless signal may be in accordance with a short-range wireless communication standard other than the BLE or may be in accordance with the wireless LAN standard.

In the above embodiments, in the controller 11, the CPU executes the programs stored in the ROM or the storage 12 to cause each of the functional components illustrated in FIG. 7 to be executed. However, the controller 11 may be dedicated hardware. Examples of the dedicated hardware include a single circuit, a complex circuit, a programmed processor, an application-specific integrated circuit (ASIC), a field-programmable gate array (FPGA), or a combination of two or more of these. When the controller 11 is dedicated hardware, the function of each component may be implemented by individual hardware devices, or the functions of the components may be collectively implemented by a single hardware device.

Some functional components may be implemented by dedicated hardware, and others may be implemented by software or firmware. The controller 11 can thus implement the above functions with hardware, software, firmware, or a combination of two or more of these.

Operation programs for defining the operation of the controller 11 may be applied to a computer such as an existing personal computer or an information terminal device, allowing the computer to function as the identification apparatus 10 or 10a.

The above program may be distributed with any method. For example, the program may be stored in a non-transitory computer-readable recording medium such as a compact disk ROM (CD-ROM), a digital versatile disk (DVD), a magneto-optical disk (MO), or a memory card for distribution or may be distributed through a communication network such as the Internet.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

### Industrial Applicability

The present disclosure may be applicable to, for example, an air-conditioning system.

### Reference Signs List

- 1: Air-conditioning system
- 2: Indoor space
- 10, 10a: Identification apparatus
- 11: Controller
- 12: Storage
- 15: Communicator
- 16: BLE antenna
- 20, 20a: Terminal device
- 21: Controller
- 22: Storage
- 23: Operational unit
- 24: Display
- 25: Communicator
- 26: BLE antenna
- 27: Gyro sensor
- 30, 30a: Imaging device
- 31: Controller
- 32: Storage
- 33: Imager
- 35: Communicator
- 37: Rotational driver
- 40: Air conditioner
- 41: Outdoor unit
- 42: Indoor unit
- 110: Strength acquirer
- 130: Captured image acquirer
- 150: Associator
- 170: Equipment controller
- 190: Movement information acquirer
- A1, A2: Captured image
- D1: Preference data
- P1, P2: Person

## Claims

1. An identification apparatus for identification of a person present in a target space, the identification apparatus comprising:
strength acquisition means for acquiring a strength of a wireless signal transmitted by a terminal device, the wireless signal including identification information of the terminal device; and
association means for associating, when the strength acquired by the strength acquisition means satisfies a predetermined condition and the person is captured in a captured image of the target space, the identification information and positional information of the person acquired from the captured image with each other.

2. The identification apparatus according to claim 1, wherein the strength acquired by the strength acquisition means satisfies the predetermined condition by increasing from below a threshold to above the threshold.

3. The identification apparatus according to claim 1 or 2, further comprising:
movement information acquisition means for acquiring movement information of the terminal device, wherein
when the strength acquired by the strength acquisition means satisfies the predetermined condition and a plurality of persons are captured in the captured image, the association means associates, with the identification information, positional information of a person of the plurality of persons, the person of the plurality of persons having in the captured image a movement matching the movement information acquired by the movement information acquisition means.

4. The identification apparatus according to any one of claims 1 to 3, further comprising:
captured image acquisition means for acquiring, as the captured image, an image captured by an imager that is rotatably drivable, wherein
when a first condition is satisfied, the captured image acquisition means acquires, as the captured image, an image captured with the imager being rotating, and
when a second condition is satisfied, the captured image acquisition means acquires, as the captured image, an image captured with an orientation of the imager being fixed.

5. The identification apparatus according to claim 4, wherein
the first condition is a condition that the person is not captured in the captured image, and
the second condition is a condition that the person is captured in the captured image.

6. The identification apparatus according to claim 4, wherein
the first condition is a condition that the strength acquired by the strength acquisition means satisfies the predetermined condition, and
the second condition is a condition that the strength acquired by the strength acquisition means does not satisfy the predetermined condition.

7. The identification apparatus according to any one of claims 1 to 6, wherein
after the strength acquired by the strength acquisition means satisfies the predetermined condition, the association means determines whether the person is captured in the captured image, and
when the person is captured in the captured image, the association means associates the identification information and the positional information acquired from the captured image with each other.

8. The identification apparatus according to any one of claims 1 to 6, wherein
after the person is captured in the captured image, the association means determines whether the strength acquired by the strength acquisition means satisfies the predetermined condition, and
when the strength satisfies the predetermined condition, the association means associates the identification information and the positional information acquired from the captured image with each other.

9. The identification apparatus according to any one of claims 1 to 8, further comprising:
equipment control means for controlling equipment installed in the target space based on the identification information and the positional information associated with each other by the association means.

10. The identification apparatus according to claim 9, wherein the equipment control means controls the equipment based on a control setting of a plurality of predetermined control settings, the control setting of the plurality of predetermined control settings corresponding to the identification information.

11. The identification apparatus according to claim 9 or 10, wherein the equipment is an air conditioner for air-conditioning the target space.

12. An equipment system, comprising:
the identification apparatus according to any one of claims 9 to 11; and
the equipment.

13. An equipment system, comprising:
the identification apparatus according to any one of claims 1 to 11; and
the terminal device.

14. An identification method for identifying a person present in a target space, the identification method comprising:
receiving a wireless signal transmitted by a terminal device, the wireless signal including identification information of the terminal device; and
associating, when a strength of the received wireless signal satisfies a predetermined condition and the person is captured in a captured image of the target space, the identification information and positional information of the person acquired from the captured image with each other.
